# EUROPEAN PATENT SPECIFICATION

(11) **EP 0 426 456 B1**
(45) Date of publication and mention of the grant of the patent: **15.05.1996**
(21) Application number: 90311934.5
(22) Date of filing: 31.10.1990
(51) Int. Cl.: G11B 15/68, G11B 17/22, G06K 17/00

(54) **Automatic storage installation for information recording media**
Automatische Lagereinrichtung für Informationsaufzeichnungsträger
Installation de rangement automatique pour supports d'enregistrement d'information

(30) Priority: 31.10.1989 JP 281905/89; 17.10.1990 JP 276195/90
(43) Date of publication of application: 08.05.1991
(73) Proprietor: SANKI ENGINEERING CO. LTD., Chiyada-ku, Tokyo 100 (JP)
(72) Inventor: Ikeda, Rei, Funabashi-shi, Chiba-ken 274 (JP)
(74) Representative: Jones, Andrée Zena

(56) References cited:
- FR-A- 2 563 985
- US-A- 3 236 577
- US-A- 3 482 712
- US-A- 3 726 400
- SMPTE JOURNAL, vol. 88, no. 4, April 1979, US, pages 221-223, KOMEI KAZAMA: 'AUTOMATIC STORAGE AND RETRIEVAL OF VIDEOTAPED PROGRAMS'
- AUTOMATISIERUNGSTECHNISCHE PRAXIS - ATP. vol. 30, no. 10, October 1988, MUNCHEN DE pages 517 - 521; TH. BUCHELE: 'SIMULATION EINER HOCHREGALLAGERSTEURUNG'
- PATENT ABSTRACTS OF JAPAN vol. 8, no. 182 (M-319)(1619) 22 August 1984 & JP-A-59 074 827 (KAWASAKI JUKOGYO) 27 April 1984

## Description

This invention relates to a storage installation for an information recording medium such as a magnetic tape or an optical disk, particularly to an automatic storage installation capable of rapidly and automatically storing and unloading a volume of information media.

It is known that, for storing a relatively large volume of information recording media such as magnetic tapes, the cartridge type tapes are aligned on a storage rack for each classification according to the contents, reference item or the number applied thereto and the tapes are manually loaded on the storage rack or unloaded therefrom as they are needed.

As described above, in a conventional storage system, the work of loading/unloading the cartridge tapes is labor-intensive and also reduces labor saving or energy saving by wasting an excessive time in case of unloading a predetermined cartridge tape from the storage rack, and the security of confidential information is reduced.

On the other hand, for centralized storing of documents or small articles, there has been provided a device in which a carriage having a facility of loading/unloading said medium runs on lanes where storage racks are aligned to load/unload the selected articles in or from a certain location of the storage rack by a command of a computerised controller; however, in the case of a volume of documents or articles being managed and automatically stored or delivered, it is impractical for a rapid loading/unloading each time it is required for a reciprocating storage/delivery operation, because of increasing the loading/unloading frequency.

U.S. Patent No. 3726400 discloses a document retrieval apparatus having a plurality of movable trays each containing encoded documents which are normally stored in addressable crypts arranged in two opposed, spaced matrices with the crypt openings of respective matrices in common vertical planes, a main document selector designed to select a desired document from among a tray of encoded documents transported thereto, and a tray transport movable in the space between the crypt matrices, the main selector and the crypt openings for transferring trays of encoded documents between their respective crypts and the main selector. A keyboard control console is also provided.

In the SMPTE Journal, Vol. 88, No. 4, April 1979 a fully automatic computer controlled tape-traffic and handling system is described. Each video-taped program's coded identification number is registered in the computer's memory and after recording the program each video tape is packed in its own case that has the sam coded tape information number. The tapes may be loaded manually into machines used exclusively for playback.

It is therefore an object of this invention to provide an automatic storage installation capable of storing a large volume of information recording media, especially a cartridge type magnetic tape, and automatically selecting them with greatly improved security in addition to a labor saving and an energy saving. A further object of this invention is to provide an automatic storage installation capable of rapid automatic selection in which picking up of a required information recording medium is performed by one action only to reduce the actuating frequency.

In order to achieve the above object, the invention provides an automatic storage installation for information recording media comprising a tray for containing a plurality of information recording media; a storage unit for storing information recording media, said storage unit comprising a perpendicular multi-stage rotating rack and a plurality of storage rack boards circulating around a perpendicular surface of the storage unit with respect of a floor surface; a storage lane in which a plurality of said storage units are arranged; a plurality of load/unload units each running between a load/unload location at which information recording media are loaded and unloaded and said storage unit; a tray information read unit; an information recording medium recognition unit for reading management information for the information recording medium and reading arrangement information of information recording mediums in the tray; a controlling unit for controlling management information of information recording media and management information of a rack address of each said storage unit and for controlling a tray information reading unit and a load/unload unit; and the information recording medium recognition unit disposed facing a first side of the traverser and the tray storage unit disposed facing a second side of the traverser which is opposite the first side, characterised in that said load/unload unit holding said tray sequentially and selectively picks up an information recording medium for transfer from said tray to said storage unit and vice versa, said load/unload unit comprising a picking robot for sequentially and selectively picking up an information recording medium contained in said tray according to a load/unload command, a tray transfer unit for transferring the picking robot along said storage unit and a running traverser orthogonally located with respect to the tray transfer unit, wherein the load/unload units are disposed in parallel positioned storage lanes and are adapted simultaneously to actuate each other to perform a load/unload operation to store a plurality of trays.

Information recording media of this invention relate not only to a magnetic tape with memorized information such as a data of a computer, a voice or an image from a television set but also to disk-memory containing optical information and further including a document or an image file.

In respect of a tape cartridge as an information recording medium according to this invention, respective specific bar codes, characters or graphics provided on said tape cartridge may be read by a recognition unit of a magnetic tape. In loading/unloading said tape cartridge, trays in which are stored a number of cartridges are used. A specific bar code or a projection is also provided on each tray to be read by a tray recognition unit. In storing (loading) a tape cartridge, a predetermined storage rack address is retrieved from the tape number, a tape storage rotating rack is determined by said rack address and a tape cartridge is transferred to a picking robot in a respective lane by a transferring conveyor. The picking robot is known from, for example, German Patent Published Application No. P3408081.3. By a loading command, the picking robot is actuated to store the magnetic tape on a determined rack. An empty tray which magnetic tape has been stored is stored in a tray storage rack.

In taking out (unloading) a tape cartridge, unloading information is classified for every picking robot by storage rack address information and this information is arranged in order of unloading. By said unloading information, the required numbers of empty trays are calculated to provide trays from the tray storage rack, by a actuating command to the picking robot or an order picker, magnetic tapes are stored in order in trays and transferred, and the unloading operation is completed.

These and other objects and many of the attendant advantages of this invention will be readily appreciated and better understood with reference to the following detailed description when considered with reference to the accompanying drawings in which:
Fig. 1 is a schematic plan view of one embodiment of an automatic storage installation according to this invention;
Fig. 2 is a perspective illustration of a tray delivering counter;
Fig. 3 is a perspective illustration of a tray according to this invention;
Fig. 4 is a perspective illustration of a vertical multi-stage rotating rack comprising storage lanes;
Figs. 5A and 5B are flow charts of loading/unloading storage systems, respectively;
Fig. 6 is a flow chart of the basic actuation of a loading system;
Fig. 7 is a flow chart of the basic actuation of an unloading system;
Fig. 8 is a plan view of an unloading operation in which trays are presented to a plurality of robots; and
Fig. 9 is a side view of a storage installation being disposed in a multi-storey arrangement.

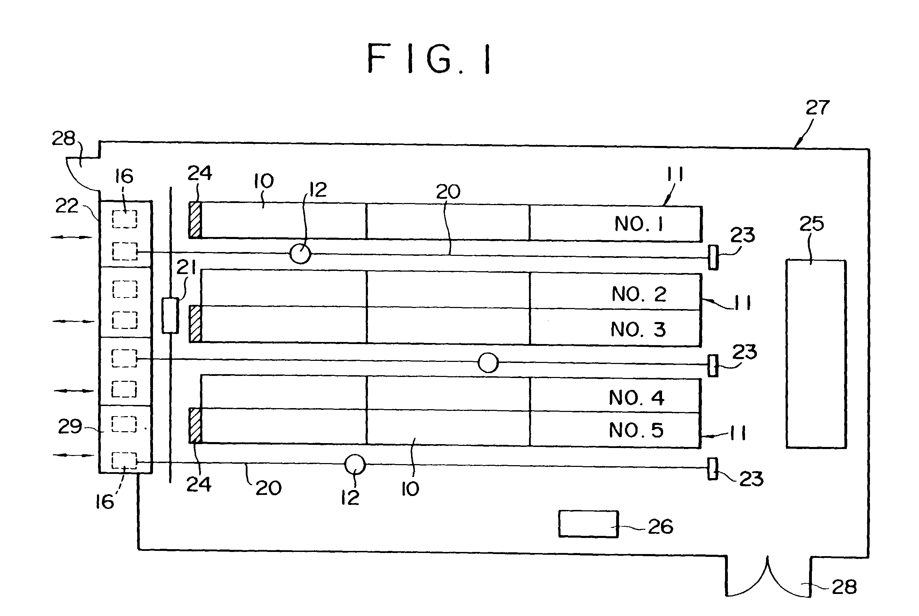

The preferred embodiment of an automatic storage installation for information recording media of the present invention is illustrated generally with reference to Fig. 1 to Fig. 3 in case of an information recording medium being a cartridge magnetic tape.

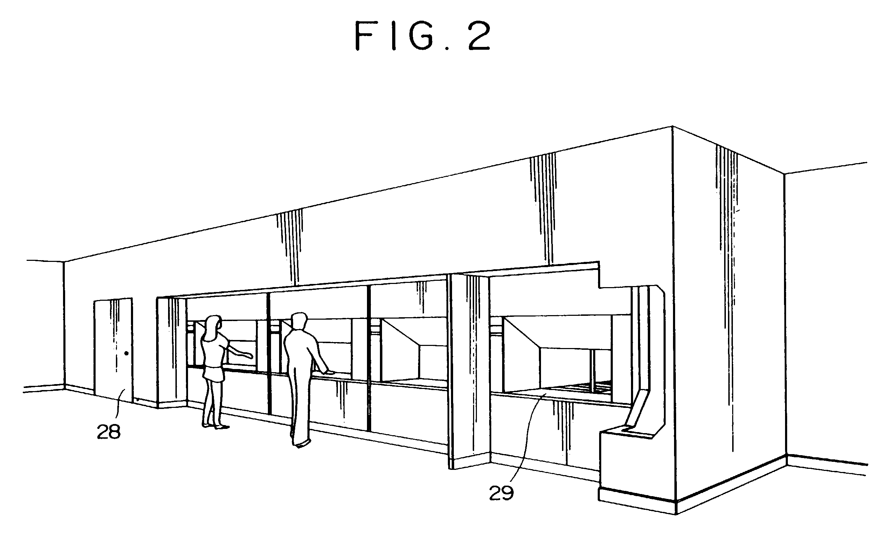

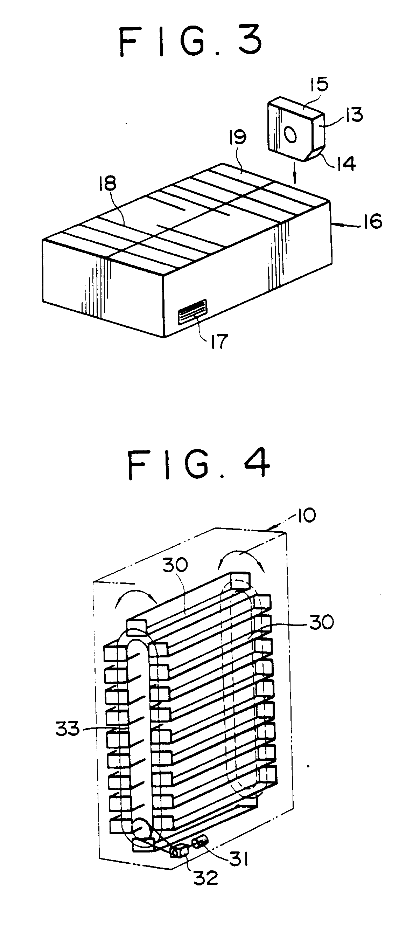

Fig. 1 is a plan view of an automatic storage installation of a magnetic tape according to this invention, Fig. 2 is a perspective view of a tray delivering counter and Fig. 3 is an enlarged perspective view of a tray.

As shown in Fig. 1, storage lane 11 comprises storage units 10 for cartridges of magnetic tape connected to each other in series. The lanes 11 are arranged in parallel (there are five lanes, numerals 1 to 5 as shown in Fig. 1) and a special picking robot 12 which is a load/unload unit is provided for the respective lanes. In the above embodiment, since some of the lanes, for example, lanes 1 and 2, and lanes 3 and 4, are opposite to each other, a common picking robot 12 capable of picking operation for both storage racks is respectively disposed for each robot station, that is, the first robot station comprising lanes 1 and 2, the second robot station comprises lanes 3 and 4 and the third robot station comprising lane 5.

In Figs. 1 and 2, reference numeral 16 is a tray, numeral 20 is a tray-transferring conveyor running along each station, numeral 21 is a traverser straddling over one of the lanes, 22 is a tray storage rack, 23 is an emergency unloading counter, 24 is a tray and tape recognition unit, 25 is a control unit, 26 is an operation console, 27 is a storage chamber containing the whole installation, 28 is an entrance or exit of the storage chamber and 29 is a tray delivering counter.

As shown in Fig. 3, each cartridge 13 containing a magnetic tape is stored on a transferring tray 16. An oblique surface 14 is provided at the lower surface of the cartridge 13 to regulate the direction of inserting direction and a bar code 15 is also provided on the upper surface thereof. A bar code 17 is provided on the external surface of the tray 16, partitions 18 are contained in the tray to store a number of cartridges 13 in order and an oblique surface (not shown) is also provided at the bottom thereof to contact each oblique surface 14 of the cartridges. Each small chamber 19 divided by each partition 18 has an address. A memory bank of a control unit 25 memorizes each specific cartridge described above, the tray number and a small chamber address in the tray. One typical tray 16 is shown in Fig. 3.

Fig. 4 is a schematic view of a storage unit 10 comprising lanes. The storage unit 10 is a vertical multi-stage rotating rack to rotate a number of rack boards 30 in respect of the perpendicular surface thereof. Endless chains 33 at the left and right sides are rotated by actuating a motor 31 through the intermediary of a reduction mechanism 32 to rotate vertically each rack board 30 which is supported between the chains as shown by arrows. A storage unit 10 has a small floor surface and is solidly constructed to store a volume of cartridges 13. As shown in Fig. 1, some storage units 10 which are lapped in series are aligned in parallel to permit tens of thousands of cartridges to be stored. The control unit manages the location of each cartridge 13 which is stored on each rack board 30 one by one.

The loading/unloading stored cartridges operation are now described. By a picking command, the rotating rack is preliminarily rotated and the rotation thereof is stopped when the rack board 30 with the intended cartridge reaches a determined position (level).

A picking robot 12 comprises a main body of the robot, a conveyor on which the main body rides to run parallel to the lane, and a handling device for grasping the cartridge and the special tray load base. At least one robot is provided on each lane to automatically load (unload) cartridges in the special tray one by one onto (from) the rack board 30 of the storage rack. At the time of a loading/unloading operation, a tray and tape recognition unit 24 reads a management code to confirm the rack address. The operation of the picking robot loading the tray on the load base thereof and running will be described hereinbelow. It is possible that the tray is not held by the picking robot but may be transferred by a separately prepared tray transferring unit (not shown).

The recognition unit 24 automatically reads the code information of each cartridge in a tray and determines the location of the storage rack address. In case of the wrong tape being loaded, said recognition unit senses the error and indicates it. For prevention of crime, there is provided an automatic shutter (not shown) at a tray delivering counter 29 to prevent any person from interfering therein, and the entrance and exit 28 requires the use of a password.

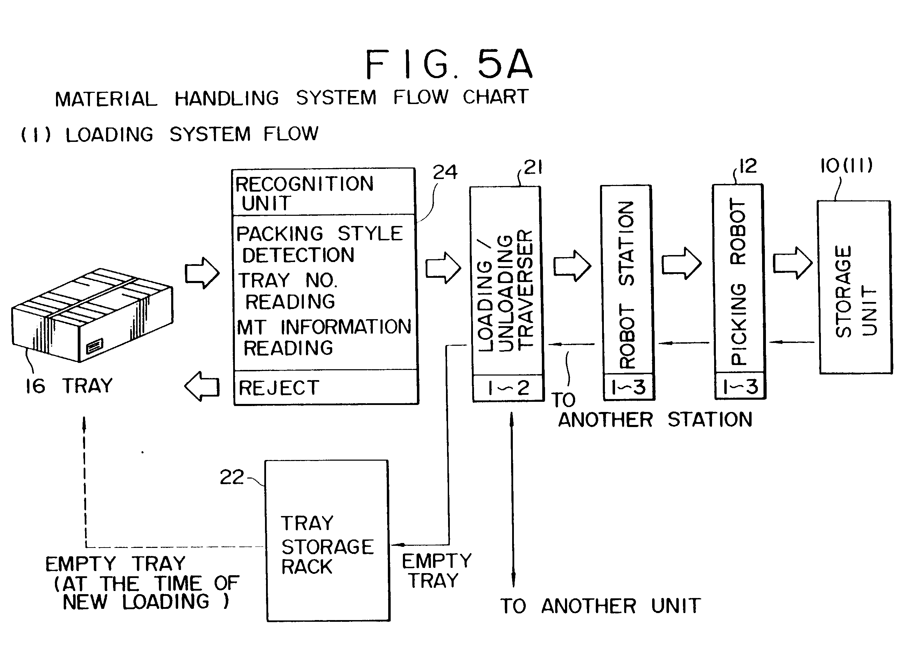

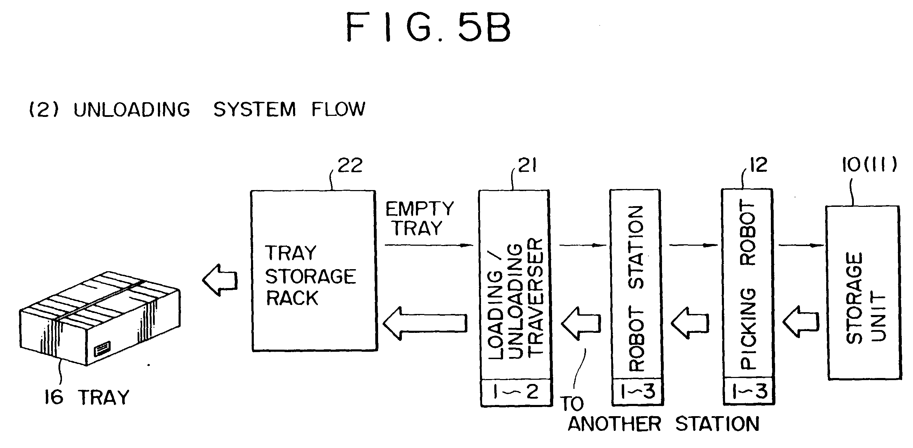

Figs. 5A and 5B is a material handling system flow chart, respectively in which Fig. 5A shows a loading (storage) system flow and Fig. 5B shows an unloading (taking out) system flow.

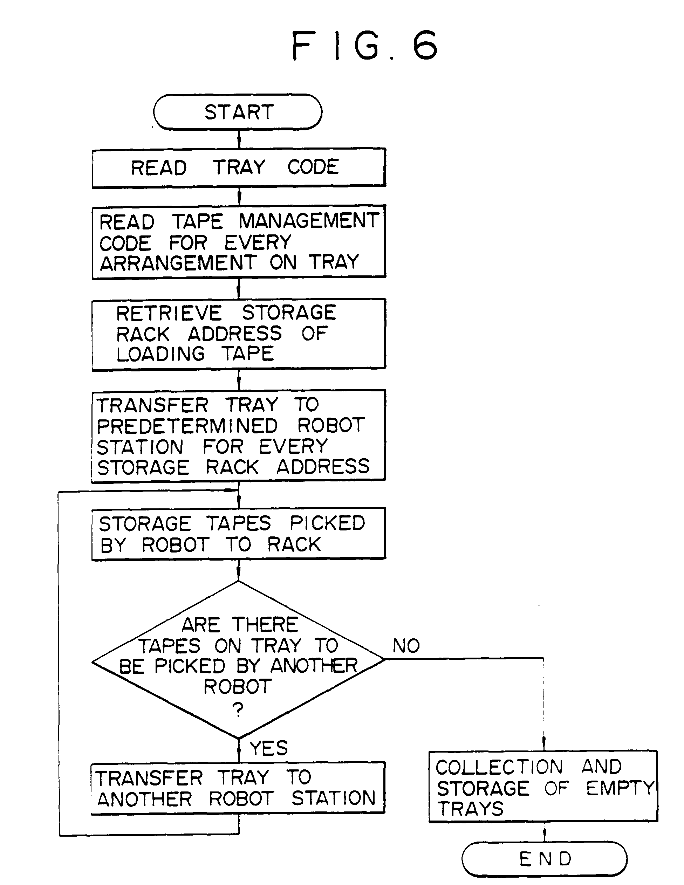

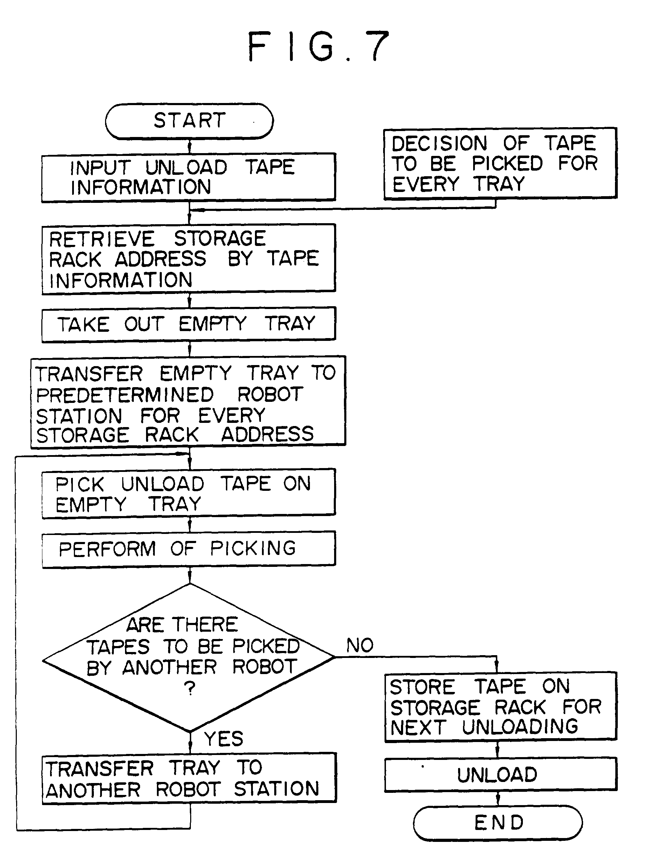

Fig. 6 shows a basic loading actuation flow and Fig. 7 shows a basic unloading system flow.

### Loading Operation

The loading process will be described hereinafter (Fig. 6).
(1) The magnetic tapes are contained in the tray and the tray is stored in the tray storage rack.
(2) The tray number and the contents (the tape number and the arrangement information) of the magnetic tape contained in the tray are read by the tray recognition unit and the magnetic tape recognition unit.
(3) The predetermined storage rack address is retrieved by the tape number.
(4) The tape storage rotating rack is determined by the rack address and the tray is transferred to a certain picking robot in the picking station by the transfer conveyor.
(5) The particular magnetic tape is stored by a loading command to the picking robot and the rotating rack.
(6) When a magnetic tape corresponding to another robot still remains after the storage is completed by the first robot, said tray is automatically transferred to be stored in another storage rack.
(7) After the storage is completed, the empty tray is stored in the tray storage rack.

### Unloading Operation The unloading process will be described hereafter (Fig. 7).

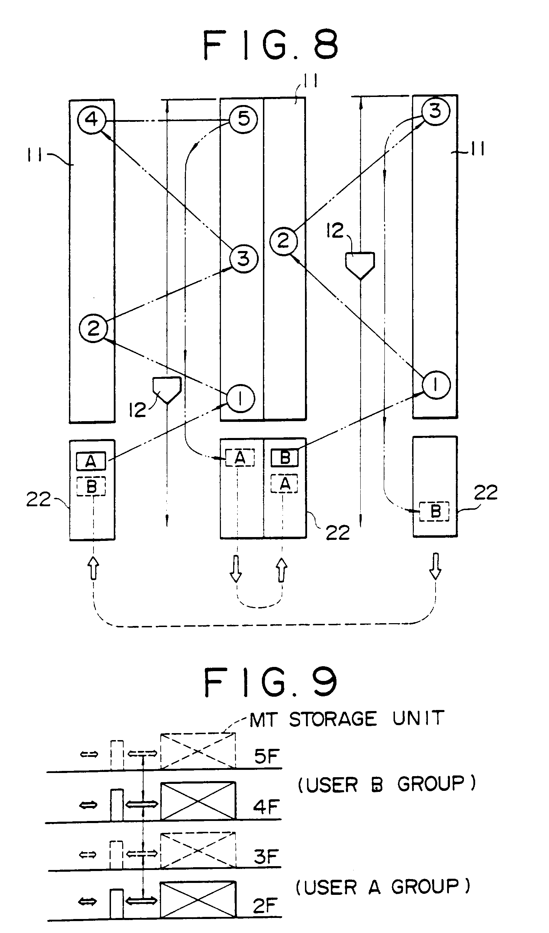

(1) The magnetic tape number to be unloaded is input to the control unit.
(2) In case of the classification being necessary for the unloaded magnetic tape for working, classification information is input to the input information (simultaneous unloading is possible).
(3) In case of there being the priority in using the unloaded magnetic tape, an unload order information is input.
(4) The control unit retrieves the storage rack address by any of the above described information.
(5) The unloading information is classified by the storage rack address information for every picking robot and the information is arranged in order of unloading.
(6) The number of the required empty tray is calculated by said unload information.
(7) The empty tray is provided to the tray load base of each robot from the tray storage rack.
(8) When the tray is provided to the robot, the tray number and the tape number (rack address) to be unloaded on a certain tray are determined and the command is input to the robot.
(9) In case that the unload information for every tray corresponds to the plurality of robots, the trays are provided to an associated plurality of robots and the unload operation is completed. For example, as shown in Fig. 8, two robots 12 run in respect of four lanes and the respective picking operation is performed in order from racks 1 to 5 in respect of the tray A and from racks 1 to 3 in respect of tray B to store each tray on the tray storage rack 22.

As shown in Fig. 9, the storage units are arranged in a multi-stage arrangement to store a large volume of cartridge tapes and each stage of said multi-stage storage units is independent to allow expansion by adding to the system gradually.

As described above, according to this invention, the real time management of the information recording medium such as the cartridge type magnetic tape can take precautions for the prevention of crime and the protection of confidential information. Other advantages of this invention will be described hereinbelow.
(1) An automatic storage of a large volume of information recording media.
(2) High speed and automation of unloading of an information recording medium.
(3) Avoidance of mis-loading the wrong information recording medium (automatic exclusion).
(4) Real time management of the unloaded information recording medium.
(5) Real time management of the stored information recording medium.
(6) Shortening the unload time by performing unload operation in order of the storage rack arrangement.
(7) An automatic arrangement of the information recording medium in the tray in the order of use.
(8) Possibility of responding to the emergency unload.
(9) An automatic reading (recognition) of the load information recording medium information.
(10) Prevention of mis-unload.
   - An employment of the absolute address for controlling the rotation of the information recording medium storage rack.
   - Lighting at the address to be unloaded.
   - Recognition of the unload light by the picking robot.

## Claims

1. An automatic storage installation for information recording media (15) comprising:
a tray (16) for containing a plurality of information recording media (15);
a storage unit (10) for storing information recording media, said storage unit (10) comprising a vertical multi-stage rotating rack and a plurality of storage rack boards (30) circulating around a perpendicular surface of the storage unit (10) with respect of a floor surface;
a storage lane (11) in which a plurality of said storage units (10) are arranged;
a plurality of load/unload units each running between a load/unload location at which information recording media are loaded and unloaded and said storage unit (10);
a tray information read unit;
an information recording medium recognition unit (24) for reading management information indicated on said information recording medium (15) and reading arrangement information of information recording media in the tray (16);
a controlling unit (25) for controlling management information of the information recording media and a management information of a rack address of each said storage unit (10) and for controlling a tray information reading unit and a load/unload unit; and
the information recording medium recognition unit (24) disposed facing a first side of the traverser (21) and a tray storage unit disposed facing a second side of the traverser which is opposite the first side, characterised in that said load/unload unit holding said tray (16) sequentially and selectively picks up an information recording medium for transfer from said tray (16) to said storage unit (10) and vice versa, said load/unload unit comprising a picking robot (12) for sequentially and selectively picking up an information recording medium contained in said tray (16) according to a load/unload command, a tray transfer unit (20) for transferring the picking robot (12) along said storage unit and a running traverser (21) orthogonally located with respect to the tray transfer unit (20), wherein the load/unload units are disposed in parallel positioned storage lanes (1-5) and are adapted simultaneously to actuate each other to perform a load/unload operation to store a plurality of trays (16).

2. An automatic storage installation for information recording media as set forth in claim 1, wherein said information recording medium is a tape cartridge (13) type magnetic tape and said information recording medium management information is indicated on an external surface of said cartridge (13).

3. An automatic storage installation for information recording media as set forth in claim 1, wherein said information recording medium is a magnetic or an optical disc.

4. an automatic storage installation for information recording media as set forth in claim 1, wherein said information recording medium is a document or an image file.

5. An automatic storage installation for information recording media as set forth in claim 1, wherein said recognition unit (24) of information recording media reads both of the arrangement information which information recording medium are arranged in said tray (16) and the tray information to input them to said control unit, said control unit (25) determines the information recording medium storage rack where said information recording medium is stored by said storage rack address information which said control unit (25) holds and permits said tray transfer unit and said information recording medium load/unload unit to output a load/unload command so as to load and unload said - information recording medium in a tray one by one into said storage unit.

6. An automatic storage installation for information recording media as set forth in claim 1, wherein said control unit (25) has a function to output a drive command to the load/unload unit of another storage lane (1-5) through said tray transfer unit, after the storage of the information recording medium in said storage lane has once been finished, when by said arrangement information and by said tray information, said control unit (25) is input information that another information recording medium is to be stored in another storage lane still remains in said tray.

7. An automatic storage installation for information recording media as set forth in claim 1, wherein in the case of unloading said information recording medium from said storage unit, by inputting a take out or an unload information to said control unit (25), an empty tray (16) is transferred from said tray storage unit (22) to a load/unload unit to unload a predetermined information recording medium in said tray one by one.

8. An automatic storage installation for information recording media as set forth in claim 1, wherein a bar code (17) or a specific code such as a projection provided on a wall surface of said tape transfer tray, a code reader reads that said picking robot (12) holds said tray and said robot is input an actuation signal by a process of said control unit to put a predetermined information recording medium in or out thus picking or loading them.

## Patentansprüche

1. Automatische Lagereinrichtung für Informationsdatenträger (15), die aufweist:
eine Ablage (16) für das Aufnehmen einer Vielzahl von Informationsdatenträgern (15);
eine Lagereinheit (10) für das Lagern der Informationsdatenträger, wobei die Lagereinheit (10) ein vertikales mehrstufiges Drehgestell und eine Vielzahl von Lagergestellplatten (30), die um eine senkrechte Fläche der Lagereinheit (10) mit Bezugnahme auf die Bodenfläche herum laufen, aufweist;
eine Lagerbahn (11), in der eine Vielzahl der Lagereinheiten (10) angeordnet werden;
eine Vielzahl von Zuführ/Entnahmevorrichtungen, die sich jeweils zwischen einer Zuführ/Entnahmestelle, an der die Informationsdatenträger zugeführt und entnommen werden, und der Lagereinheit (10) bewegen;
eine Leseeinrichtung für die Ablageinformatlon;
eine Erkennungseinrichtung (24) für den Informationsdatenträger, um die Managementinformation, die im Informationsdatenträger (15) angezeigt wird, und die Information zur Leseanordnung des Informationsdatenträgers in der Ablage (16) zu lesen:
eine Steuereinrichtung (25) für das Steuern der Managementinformation des Informationsdatenträgers und einer Managementinformation zur Gestelladresse einer jeden Lagereinheit (10) und für das Steuern einer Leseeinrichtung für die Ablageinformation und einer Zuführ/Entnahmevorrichtung: und
die Erkennungseinrichtung (24) für den Informationsdatenträger, die so angeordnet ist, daß sie einer ersten Seite einer Schiebevorrichtung (21) und einer Ablagelagereinheit gegenüberliegt, die so angeordnet ist, daß sie einer zweiten Seite der Schiebevorrichtung gegenüberliegt, die der ersten Seite gegenüberliegt, dadurch gekennzeichnet, daß die Zuführ/Entnahmevorrichtung, die die Ablage (16) hält, sequentiell und selektiv einen Informationsdatenträger für einen Transport von der Ablage (16) zur Lagereinheit (10) aufnimmt und umgekehrt, wobei die Zuführ/Entnahmevorrichtung aufweist: einen Aufnahmeroboter (12) für das sequentielle und selektive Aufnehmen eines Informationsdatentragers, der in der Ablage (16) enthalten ist, entsprechend einem Zuführ/Entnahmebefehl; eine Ablagetransportvorrichtung (20) für das Transportieren des Aufnahmeroboters (12) längs der Lagereinheit und eine sich bewegende Schiebevorrichtung (21), die mit Bezugnahme auf die Ablagetransportvorrichtung (20) orthogonal angeordnet ist, worin die Zuführ/Entnahmevorrichtungen in parallel angeordneten Lagerbahnen (1-5) angeordnet und so konstruiert sind, daß sie gleichzeitig einander betätigen, um einen Zuführ/Entnahmebetrieb durchzuführen, um eine Vielzahl von Ablagen (16) zu lagern.

2. Automatische Lagereinrichtung für Informationsdatenträger nach Anspruch 1, bei der der Informationsdatenträger ein Magnetband in einer Bandkassette (13) ist und die Managementinformation für den Informationsdatenträger auf der äußeren Oberfläche der Kassette (13) angezeigt wird.

3. Automatische Lagereinrichtung für Informationsdatenträger nach Anspruch 1, bei der der Informationsdatenträger eine Magnetplatte oder eine optische Platte ist.

4. Automatische Lagereinrichtung für Informationsdatenträger nach Anspruch 1, bei der der Informationsdatenträger eine Dokument- oder eine Bilddatei ist.

5. Automatische Lagereinrichtung für Informationsdatenträger nach Anspruch 1, bei der die Erkennungseinrichtung (24) für den Informationsdatenträger sowohl die Anordnungsinformation, nach der der Informationsdatenträger in der Ablage (16) angeordnet wird, als auch die Ablageinformation, um diese in die Steuereinrichtung einzugeben, liest, wobei die Steuereinrichtung (25) das Lagergestell des Informationsdatenträgers mittels der in der Steuereinrichtung (25) enthaltenen Adresseninformation für das Lagergestell ermittelt, in dem der Informationsdatenträger gelagert wird. und gestattet, daß die Ablagetransportvorrichtung und die Zuführ/Entnahmevorrichtung für den Informationsdatenträger einen Zuführ/Entnahmebefehl ausgeben, um den Informationsdatenträger in einer Ablage einen nach dem anderen der Lagereinheit zuzuführen oder daraus zu entnehmen.

6. Automatische Lagereinrichtung für Informationsdatenträger nach Anspruch 1, bei der die Steuereinrichtung (25) die Funktion hat, einen Antriebsbefehl an die Zuführ/Entnahmevorrichtung einer weiteren Lagerbahn (1-5) mittels der Ablagetransportvorrichtung auszugeben, nachdem die Lagerung des Informationsdatenträgers in der Lagerungsbahn erst einmal abgeschlossen wurde, wenn durch die Anordnungsinformation und die Ablageinformation der Steuereinrichtung (25) die Information eingegeben wird, daß ein weiterer Informationsdatenträger in einer weiteren Lagerbahn gelagert werden soll, jedoch in der Ablage verbleibt.

7. Automatische Lagereinrichtung für Informationsdatenträger nach Anspruch 1, bei der im Falle des Entnehmens des Informationsdatenträgers aus der Lagereinheit durch Eingeben einer Entnahmeinformation in die Steuereinrichtung (25) eine leere Ablage (16) von der Ablagelagereinheit (22) zur Zuführ/Entnahmevorrichtung transportiert wird, um einen vorgegebenen Informationsdatenträger in der Ablage einen nach dem anderen zu entnehmen.

8. Automatische Lagereinrichtung für Informationsdatenträger nach Anspruch 1, bei der ein Streifenkode (17) oder ein spezifischer Kode, wie beispielsweise ein Vorsprung, an einer Wandfläche der Bandtransportablage angebracht ist; ein Kodeleser anzeigt, daß der Aufnahmeroboter (12) die Ablage hält, und dem Roboter ein Betätigungssignal durch einen Prozeß der Steuereinrichtung eingegeben wird, um einen vorgegebenen Informationsdatenträger hinein- oder herauszubringen, indem sie auf diese Weise aufgenommen oder zugeführt werden.

## Revendications

1. Installation automatique de stockage pour supports d'enregistrement d'information (15) comprenant :
un plateau (16) pour contenir plusieurs supports d'enregistrement d'information (15);
une unité de stockage (10) pour emmagasiner les supports d'enregistrement d'information, ladite unité de stockage (10) comprenant un râtelier vertical rotatif à plusieurs étages et plusieurs plaques de râtelier de stockage (30) circulant autour d'une surface de l'unité de stockage (10) perpendiculaire à une surface de plancher;
une voie de stockage (11) dans laquelle sont disposées plusieurs desdites unités de stockage (10);
plusieurs unités de chargement/déchargement circulant chacune entre un emplacement de chargement/déchargement où les supports d'enregistrement d'information sont chargés et déchargés et ladite unité de stockage (10);
une unité de lecture d'informations de plateau:
une unité de reconnaissance de support d'enregistrement d'information (24) pour lire les informations de gestion indiquées sur ledit support d'enregistrement d'information (15) et pour lire dans le plateau (16) les informations de disposition des supports d'enregistrement d'information;
une unité de commande (25) pour commander l'information de gestion des supports d'enregistrement d'information et une information de gestion d'une adresse de râtelier de chacune desdites unités de stockage (10) et pour commander une unité de lecture d'information de plateau et une unité de chargement/déchargement: et
l'unité de reconnaissance de support d'enregistrement d'information (24) étant disposée face à un premier côté du transporteur (21) et une unité de stockage de plateau disposée face à un deuxième côté du transporteur qui est opposé au premier côté,
caractérisée en ce que ladite unité de chargement/déchargement maintenant ledit plateau (16) saisit séquentiellement et sélectivement un support d'enregistrement d'information pour le transfert dudit plateau (16) à ladite unité de stockage (10) et vice versa, ladite unité de chargement/déchargement comprenant un robot de saisie (12) pour saisir séquentiellement et sélectivement un support d'enregistrement d'information dans ledit plateau (16) selon une commande de chargement/déchargement, avec une unité de transfert de plateau (20) pour transférer le robot de saisie (12) le long de ladite unité de stockage et un transporteur de marche (21) disposé perpendiculairement par rapport à l'unité de transfert de plateau (20) dans laquelle les unités de chargement/déchargement sont disposées dans des voies de stockage parallèles (1-5) et sont adaptées pour s'actionner simultanément l'une l'autre pour effectuer une opération de chargement/déchargement afin de stocker plusieurs plateaux (16).

2. Installation automatique de stockage pour support d'enregistrement d'information tel que décrite dans la revendication 1, dans laquelle ledit support d'enregistrement d'information est une bande magnétique du type à cassette (13) et ladite information de gestion du support d'enregistrement d'information est indiquée sur une surface externe de ladite cassette (13).

3. Installation automatique de stockage pour support d'enregistrement d'information telle que décrite par la revendication 1. dans laquelle ledit support d'enregistrement d'information est un disque magnétique ou un disque optique.

4. Installation automatique de stockage pour support d'enregistrement d'information telle que décrite dans la revendication 1, dans laquelle ledit support d'enregistrement d'information est un document ou une fiche d'image.

5. Installation automatique de stockage pour support d'enregistrement d'information telle que décrite dans la revendication 1, dans laquelle ladite unité de reconnaissance (24) des supports d'enregistrement d'information lit les informations de disposition du support d'enregistrement d'information qui sont disposées dans ledit plateau (16) et les informations de plateau pour les introduire dans ladite unité de commande, ladite unité de commande (25) détermine le râtelier de stockage de support d'enregistrement d'information où ledit support d'enregistrement d'information est stocké, par ladite information d'adresse de râtelier de stockage contenu dans ladite unité de commande (25) et permet que ladite unité de transfert de plateau et ladite unité de chargement/déchargement de support d'enregistrement d'information envoie une instruction de chargement/déchargement de façon à charger et décharger lesdits supports d'enregistrement d'information dans un plateau l'un après l'autre dans ladite unité de stockage.

6. Installation automatique de stockage pour support d'enregistrement d'information telle que décrite par la revendication 1, dans laquelle ladite unité de commande (25) comporte une fonction pour envoyer une instruction de commande à l'unité de chargement/déchargement d'une autre voie de stockage (1-5) par ladite unité de transfert de plateau, après que le stockage du support d'enregistrement d'information dans ladite voie de stockage a été terminé, lorsque par ladite information de disposition et par ladite information de plateau, ladite unité de commande (25) reçoit des informations qu'un autre support d'enregistrement d'information devant être stockée dans une autre voie de stockage, reste toutefois dans ledit plateau.

7. Installation automatique de stockage pour support d'enregistrement d'information telle que décrite par la revendication 1, dans laquelle, dans le cas du déchargement dudit support d'enregistrement d'information de ladite unité de stockage, par introduction d'une information de saisie ou de déchargement dans ladite unité de commande (25). un plateau vide (16) est transféré de ladite unité de stockage de plateau (22) vers une unité de chargement/déchargement pour décharger un support d'enregistrement d'information prédéterminé dans ledit plateau l'un après l'autre.

8. Installation automatique de stockage pour support d'enregistrement d'information telle que décrite par la revendication 1, dans laquelle il existe un code à barres (17) ou un code particulier tel que une saillie prévue sur une surface de paroi dudit plateau de transfert de bande, un lecteur de code lit que ledit robot de saisie (12) contient ledit plateau et ledit robot reçoit un signal d'actionnement par une opération de ladite unité de commande pour introduire un support d'enregistrement d'information prédéterminé ou l'extraire, ce qui correspond à la saisie ou au chargement de celui-ci.
